# EUROPEAN PATENT APPLICATION

(11) **EP 3 442 082 A1**
(43) Date of publication of application: **13.02.2019**
(21) Application number: 17185557.0
(22) Date of filing: 09.08.2017
(51) Int. Cl.: H01R 13/635, H01R 13/66, H02H 3/22, H01R 31/06

(54) **DEVICE FOR UNPLUGGING AN ELECTRONIC APPLIANCE FROM AN ELECTRICAL POWER OR SIGNAL SOURCE**

(71) Applicant: Nagravision S.A., 1033 Cheseaux-sur-Lausanne (CH)
(72) Inventor: THOMAS, Frédéric, 1203 Genève (CH); BURCKARD, Antoine, 78180 Montigny le Bretonneux (FR)
(74) Representative: Korenberg, Alexander Tal

(57) **Abstract**

An unplugging device for unplugging an electronic appliance from an electrical power or signal source, the unplugging device being configured to remove a cable plug of the electronic appliance from a receptacle in response to an electrical signal. The unplugging device, comprises a mechanical actuator coupled with the receptacle or the cable plug and a system on chip comprising at least a processor, a memory, a communication module and an output module. The system on chip is configured to generate an output electrical signal in response to an input digital signal received by the communication module and processed by the processor. The mechanical actuator is configured to remove the cable plug from the receptacle at reception of the output electrical signal generated by the output module.

## Description

### Introduction

The application relates to a device configured to unplug an electronic appliance from a power or signal source to prevent irreversible damages to the appliance in case of perturbations caused by lightning strikes during thunderstorms.

### Technical background

High technology electronic appliances become more and more sensitive to perturbations on power or signals provided by different sources. Lightning strikes from electrical storms generate overloads in form of voltage or current peaks in cables linking the electronic appliances to electrical power or signal sources. A lightning strike can burn out circuits in the electronic appliance so that repair is quite impossible and the replacement of the whole electronic appliance becomes necessary. Various types of surge and spike protection means based on switches are available on the market, but most of them are not efficient enough to protect the electronic appliance against the extreme conditions produced by a lightning strike for example.

In fact, the most efficient way to protect an electronic appliance from lightning strikes is to physically disconnect the electronic appliance from the source providing power or signals. For example, electrical plugs for various appliances, antenna plugs from various wall receptacles, and cable connections from a cable television input line may be disconnected in right time to prevent damages on the concerned appliance.

Since a person cannot easily remove plugs from their receptacle on many electronic appliances in a short time during an electrical storm, an efficient universal automated unplugging device is needed.

Document US5083042 proposes an unplugging apparatus including an electrical sensing circuit for sensing the approach of an electrical storm, and a mechanical actuator for disconnecting a power cord plug from a receptacle in response to a signal from the sensing circuit. The sensing circuit and the mechanical actuator are mounted within a housing. A nylon pull cord extends from the housing and is connected to the power cord plug to disconnect the plug from the receptacle. The other end of the pull cord is connected to a pivotable trigger arm, which pivots to pull the pull cord in response to activation by the sensing circuit. A coil spring biases the trigger arm so as to pull the pull cord, and a latch is operable to retain the trigger arm until actuated by the sensing circuit. A solenoid is energized to operate the latch and release the trigger arm, by a signal from the sensing circuit. The sensing circuit includes a detector circuit which receives static produced by lightning in form of radio waves. The detector circuit produces a signal in response to radio waves of a predetermined amplitude. The signal produced by the detector circuit is then converted to an audio signal and amplified. The amplified signal will energize a relay which closes a second circuit energizing the solenoid.

The main drawbacks of this unplugging apparatus are its relatively cumbersome size and the complex mechanism including the pull cord that extends from the housing of the apparatus and holds the cable near the plug for pulling the same from the receptacle. Furthermore, the unplugging apparatus is provided with an independent housing without possibility to be integrated in a power cable plug or in a wall receptacle for example.

### Brief description of the drawings

The following detailed description refers to the attached drawings in which:
Figure 1a shows a schematic view of a power cable plug inserted in a wall receptacle, the unplugging device according to the present disclosure being integrated in the cable plug.
Figure 1b shows a schematic view of the power cable plug of figure 1 a after ejection from the wall receptacle.
Figure 2a shows a schematic view of a power cable plug inserted in a wall receptacle, the unplugging device according to the present disclosure being integrated in the wall receptacle.
Figure 2b shows a schematic view of the power cable plug of figure 2a after ejection from the wall receptacle.
Figure 3a shows a schematic view of a coaxial adapter including the unplugging device according to the present disclosure in a locked state.
Figure 3b shows a schematic view of a coaxial adapter including the unplugging device according to the present disclosure in an unlocked state after ejection from a receptacle.
Figure 4 shows a block diagram of the system on chip of the unplugging device according to the present disclosure.

### Summary

An object of the present application is to provide an efficient integrated unplugging device capable to unplug a cable plug of an electronic appliance from a receptacle while maintaining a safe distance between the cable plug and the receptacle once unplugged.

A further object of the application is to provide a universal unplugging device that may be integrated in various types of receptacles and / or cable plugs or built in an adapter configured to be plugged between the receptacle and the cable plug.

An adapter may be useful for cases where the plug is lockable to the receptacle, as for example bayonet type connectors such as BNC plugs for coaxial cables or connectors with a screw thread requiring unscrewing operation such as F type connectors for antenna cable. Since such lockable plugs cannot be unplugged easily by simply pulling like power plugs, an adapter may be needed.

An adapter may also be useful in any case where plug or receptacle are not featured with the hereafter described unplugging device.

According to an embodiment, an unplugging device for unplugging an electronic appliance from an electrical power or signal source is disclosed. The unplugging device, configured to remove a cable plug of the electronic appliance from a receptacle in response to an electrical signal, comprises a mechanical actuator coupled with the receptacle or the cable plug capable to eject the cable plug at a predetermined distance from the receptacle.

The unplugging device further comprises a system on chip comprising at least a processor, a memory and a communication module. The system on chip is configured to generate an output electrical signal in response to an input digital signal received by the communication module and processed by the processor. The mechanical actuator removes the cable plug from the receptacle at reception of the output electrical signal generated by the system on chip.

The system on chip of the unplugging device may preferably be configured to receive warnings in form of an input digital signal related to coming thunderstorms. These warnings enable generating the output electrical signal activating the mechanical actuator for ejecting the cable plug from its receptacle.

The distance separating the receptacle and the cable plug once unplugged by the unplugging device is determined in order to prevent propagation of an electrical arc between the contacts of the receptacle and the contacts of the plug. In fact, during a thunderstorm, the electrical arc caused by overvoltage peaks may link the contacts on several millimeters in particular when ambient humidity rate is high. For example, a distance of 10 cm or more could be considered as safe enough to prevent damages in the electronic appliance through voltage overload even when the plug is disconnected.

### Detailed description

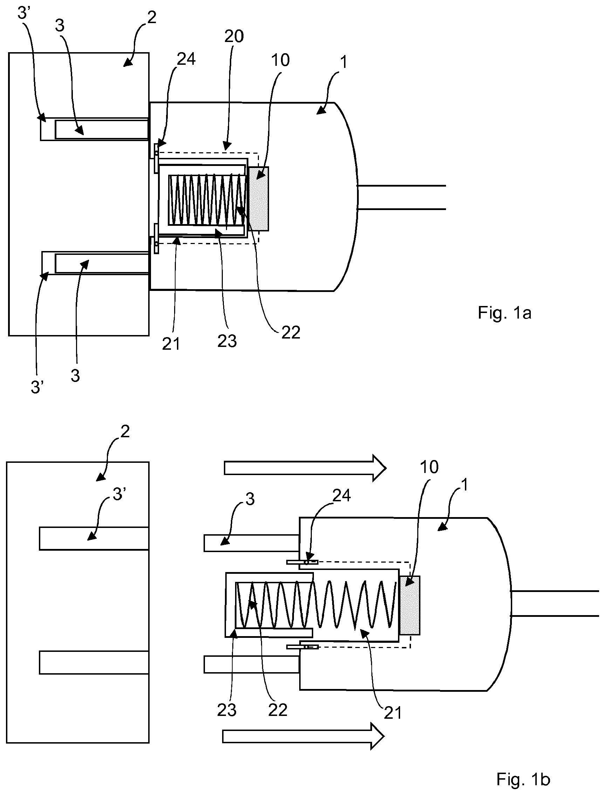

The schematic view of a power cable plug inserted in a wall receptacle 2 of figure 1 a shows an embodiment where the unplugging device is integrated in the cable plug 1.

The cable plug 1 is preferably provided with a cylindrical cavity 21 located in a central position between the contacts 3 of the plug 1 as represented by figure 1a. The cavity 21 serves as an enclosure for the unplugging device formed by the mechanical actuator 20 associated with the system on chip 10.

According to a preferred configuration, the mechanical actuator 20 may comprise a cylindrical spring 22 surrounded by a cylindrical sleeve 23 configured to slide in the cavity 21. The spring 22 and the sleeve 23 are coaxially arranged in the cavity. One end of the sleeve 23 closes the cavity 21 by locking up the spring 22 while the other end remains open so that the spring 22 rests against the bottom of the cavity 21. The sleeve 23 is preferably made up of an insulating material.

In a standby state of the unplugging device, the sleeve 23 is pushed in the cavity 21 in order to compress the spring 22. A locking mechanism 24 located along all or part of the edge of the cavity opening is configured to maintain the sleeve 23 pushed inside the cavity 21. The locking mechanism 24 is coupled with the system on chip 10 for operating with at least one electromagnet to be activated by the system on chip 10. This coupling is represented by a dotted line on figures 1 a and 1 b. The unplugging device is in the standby state when the cable plug 1 is inserted in the wall receptacle 2. The at least one electromagnet, being a part of the mechanical actuator, plays a role of an interface between the system on chip and the mechanical actuator.

The system on chip 10 configured to control the mechanical actuator 20 is powered through the contacts of the cable plug when it is connected to the wall receptacle.

Figure 1b represents the cable plug 1 of figure 1 a including the unplugging device in an activated state. The locking mechanism 24 maintaining the sleeve 23 inside the cavity 21 is activated by the system on chip 10 generating the output electrical signal. The at least one electromagnet powered by the output electrical signal exert a force on the locking mechanism 24 in order to release the sleeve 23. Once released, the sleeve 23 is pushed out of the cavity 21 by the spring 22 having a sufficient force for ejecting the cable plug 1 from the receptacle 2, in direction of the arrows in figure 1 b. The sleeve 23 may be retained out of the cavity 21 by the spring 22 which is attached to the inner wall of the end closing the cavity 21 and to the bottom of the cavity 21.

The cable plug 1 is ejected from the receptacle 2 at a distance determined to prevent creation of an electrical arc between contacts 3' of the receptacle and contacts 3 of the plug due to the voltage peaks. This distance may be determined by dimensioning the mechanical actuator 20. For example, the diameter and the depth of the cavity 21, length and the diameter of the sleeve 23 as well as the strength of the spring 22, geometry and mass of the cable plug 1 are factors to be taken into account for determining the ejection force, respectively the distance at which the cable plug 1 is to be ejected.

After ejection, the mechanical actuator 20 of the cable plug 1 may be rearmed manually or by plugging again the cable plug 1 into the wall receptacle 2. The rearming operation pushes the sleeve 23 into the cavity 21 by compressing the spring 22 and the locking mechanism 24 comes back into a locked position. The unplugging device 20 returns thus in the standby state ready to be reactivated.

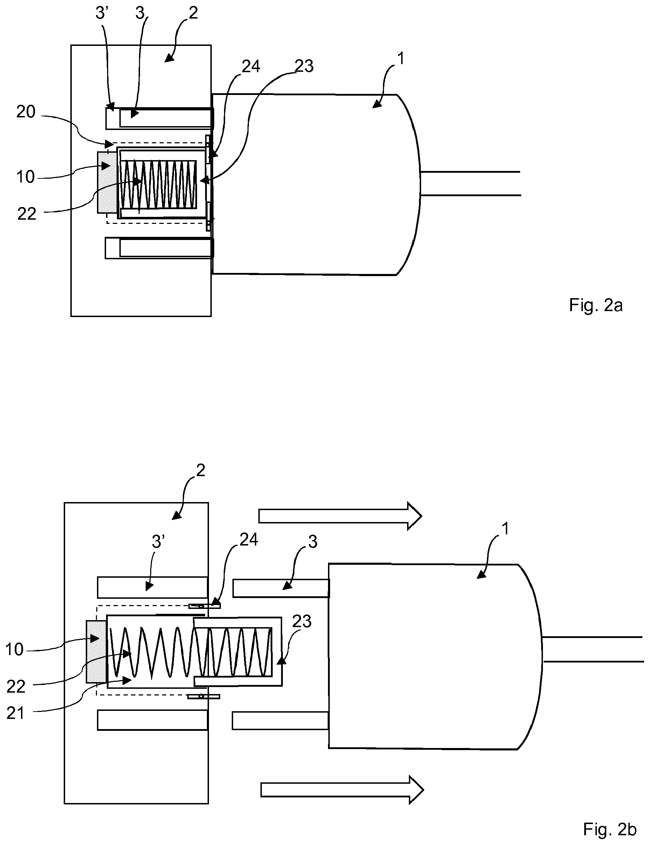

The schematic view of a power cable plug inserted in a wall receptacle of figure 2a shows an embodiment where the unplugging device is integrated in the receptacle 2.

The wall receptacle 2 is preferably provided with a cylindrical cavity 21 located in a central position between the contacts 3' of the receptacle as represented by figure 2a. As in the preceding embodiment, the cavity 21 serves as an enclosure for the unplugging device formed by the mechanical actuator 20 associated with the system on chip 10.

The unplugging device integrated in the wall receptacle may have a similar structure than the unplugging device integrated in the cable plug 1.

Figure 2b represents the wall receptacle of figure 2a including the unplugging device in an activated state. The locking mechanism 24 maintaining the sleeve 23 inside the cavity 21 is activated by the system on chip 10 in a similar way than for the locking mechanism of the unplugging device integrated in the cable plug 1.

The ejection distance is determined by the same factors than for the mechanical actuator of the unplugging device of the preceding embodiment.

After ejection, the mechanical actuator 20 of the wall receptacle 2 may be rearmed manually or by plugging again the cable plug 1 into the wall receptacle 2. The unplugging device 20 returns thus in the standby state ready to be reactivated.

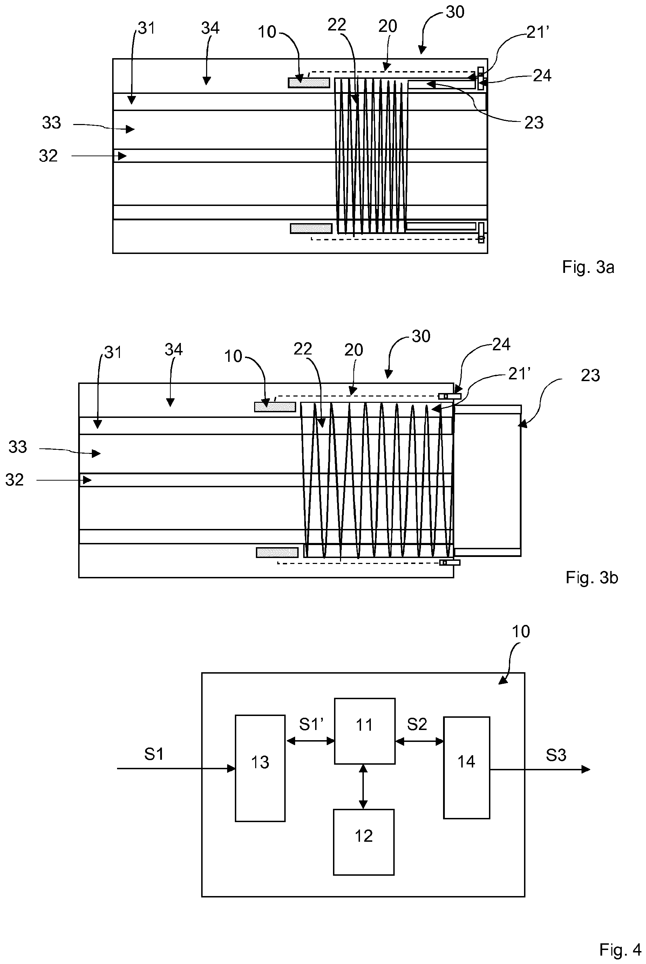

According to a further embodiment illustrated by figures 3a and 3b, the unplugging device may be configured to be integrated in an adaptor 30 comprising a first end plugged into a receptacle and a second end plugged in a cable plug. The mechanical actuator 20 ejects the cable plug from the adaptor 30 at reception of the output electrical signal generated by the system on chip 10. The output electrical signal enables releasing the spring 22 of the mechanical actuator 20, the adaptor 30 remaining plugged in the receptacle.

According to a further embodiment, the mechanical actuator 20 may eject the adaptor 30 from the receptacle, the cable plug remaining plugged in the adaptor 30.

Figure 3a and 3b show an example of a coaxial adaptor 30 to be connected between a wall receptacle and a plug of a coaxial cable linked to an electronic appliance such as a television set top box or a television set. The coaxial adaptor 30, having a generally cylindrical body, may comprise an external coating 34 made up of conductive or insulating material surrounding a shield conductor 31 that surrounds an insulating sleeve 33 arranged around and axial conductor 32. The insulating sleeve 33 is arranged in a way to entirely fill the space between the axial central conductor 32 and the shield conductor 31 along the whole length of the cylindrical body of the coaxial adaptor 30.

In this embodiment, the unplugging device is located at one end of the coaxial adaptor 30. The spring 22 and the sleeve 23 may be coaxially arranged so as to fit and slide in a cylindrical sliding space 21' between the shield conductor 31 and the external coating 34. The sliding space 21' includes an annular bottom part against which the spring 22 rests and an annular opening on the external section at the end of the coaxial adaptor 30 where the unplugging device is located. The arrangement of the spring 22 and the sleeve 23 around the shield conductor 31 prevents perturbations of the electrical high frequency signals flowing through the central conductor 32. The system on chip 10 may also be located between the shied conductor 31 and the external coating 34 near the sliding space 21'.

As in the preceding embodiments, in a standby state of the unplugging device, the sleeve 23 is pushed in the sliding space 21' between the shield conductor 31 and the external coating 34 in order to compress the spring 22. The locking mechanism 24 preferably located on the edge of the annular opening of the sliding space 21' is configured to maintain the sleeve 23 in a compressed state. The locking mechanism 24 is coupled with the system on chip 10 for operating for example with at least one electromagnet to be activated by the system on chip 10. This coupling is represented by a dotted line on figures 3a and 3b.

The system on chip 10 configured to control the mechanical actuator 20 may be powered through the central conductor 32 and the shield conductor 31 by an electric tension provided by the electronic appliance via the coaxial cable on which the adaptor is connected.

Figure 3b represents the adaptor of figure 3a including the unplugging device in an activated state. The locking mechanism 24 maintaining the sleeve 23 is activated by the system on chip 10 in a similar way than for the locking mechanism of the unplugging device integrated in the cable plug or in the receptacle of the preceding embodiments.

The ejection distance is determined by the same factors than for the mechanical actuator of the unplugging device of the preceding embodiments.

After ejection, the mechanical actuator 20 of the coaxial adaptor 30 may be rearmed manually or by plugging again the coaxial adaptor 30 into the receptacle or into the cable plug. The unplugging device 20 returns thus in the standby state ready to be reactivated.

According to a further embodiment, the unplugging device may also be integrated in a power adaptor to be connected between a conventional power cable plug and a conventional power receptacle.

Figure 4 shows a block schematic of the system on chip of the unplugging device comprising a processor 11, a flash type non-volatile memory 12, a communication module 13 and an output module 14.

The communication module 13 is configured to receive a digital input signal S1 provided by an external data source and to forward a digital image signal S1' of the input signal S1 to the processor 11. The processor 11 processes and interprets this digital image signal S1' in accordance to a software program stored in the memory 12 and outputs a digital resulting processed signal S2. The output module 14 operates as an output interface configured to transform the digital resulting processed signal S2 received from the processor 11 in order to generate an output electrical signal S3 capable to activate the mechanical actuator 20. According to an exemplary embodiment, the output electrical signal S3 may be in form of a power pulse able to activate an electromagnet of the mechanical actuator 20 associated with the system on chip 10.

The communication module 13 of the system on chip 10 is configured to receive digital input signals provided by data sources comprising weather stations, thunderstorms alerts, electrical grid information. These data sources transmit alert signals related to coming thunderstorms to the communication module 13. The digital input signal S1 originating from the alert signals is then processed by the processor 11 of the system on chip to determine unplugging of the electronic appliance.

The alert signals may also be voluntarily transmitted by a user via a mobile network for example. A particular application related to home management may be used on a portable device such as a smart phone, a tablet or a portable personal computer. A dedicated user interface of the application may allow to control electronic appliances that are the most sensitive to power overloads and to unplug the concerned electronic appliances individually through a user command. The electronic appliances may be connected to a home network and identified on the home network by a specific address. The user of the application can therefore transmit targeted unplugging commands to specific appliances via the mobile network and the home network. These commands are then received by the communication modules 13 of the concerned systems on chip 10 as a digital input signal S1.

In general, thunderstorm alert signals are transmitted in a specific geographical area in a broadcast mode via various networks for protecting a maximum number of appliances.

The communication module 13 may be configured to receive alert signals as an input digital signal S1 transmitted by a utility providing services to the appliance, the utility may comprise a modem router of an internet service provider (ISP) or an electrical utility controlling power distribution. The input digital signal may be transmitted to the communication module 13 by the electrical utility via a wide area power line communication or via a communication network or a combination thereof.

For example, a modem router may receive alert signals from an internet service provider via the IP communication network or from the electrical power provider by using power line communication technology (PLC).

In case of electrical plugs or receptacles as illustrated by figures 1a, 1b and 2a, 2b, the alerts signals may be transmitted by using power line communication technology (PLC) in a similar way than the signals for managing rates on electric meters. The communication module 13 may thus be connected to the contacts 3 of the plug or the contacts 3' of the receptacle in order to capture these alerts signals.

In case of coaxial links to aerials or cable networks, the alert signals may respectively be transmitted by radio waves or on the cable in parallel to the high frequency electrical signals as for example audio / video content transport streams. The communication module 13 of the system on chip 10 as integrated in the coaxial adaptor 30 of figures 3a, 3b for example, may thus be connected to the central conductor 32 and the shield conductor 31 of the coaxial adaptor 30.

Although embodiments of the present disclosure have been described with reference to specific example embodiments, it will be evident that various modifications and changes may be made to these embodiments without departing from the broader scope of these embodiments. Accordingly, the specification and drawings are to be regarded in an illustrative rather than a restrictive sense. The accompanying drawings that form a part hereof, show by way of illustration, and not of limitation, specific embodiments in which the subject matter may be practiced. The embodiments illustrated are described in sufficient detail to enable those skilled in the art to practice the teachings disclosed herein. Other embodiments may be utilized and derived there from, such that structural and logical substitutions and changes may be made without departing from the scope of this disclosure. The detailed description, therefore, is not to be taken in a limiting sense, and the scope of various embodiments is defined only by the appended claims, along with the full range of equivalents to which such claims are entitled.

Such embodiments of the inventive subject matter may be referred to herein, individually and/or collectively, by the term "disclosure" merely for convenience and without intending to voluntarily limit the scope of this application to any single inventive concept if more than one is in fact disclosed. Thus, although specific embodiments have been illustrated and described herein, it should be appreciated that any arrangement calculated to achieve the same purpose may be substituted for the specific embodiments shown. This disclosure is intended to cover any and all adaptations or variations of various embodiments. Combinations of the above embodiments, and other embodiments not specifically described herein, will be apparent to those of skill in the art upon reviewing the above description.

## Claims

1. An unplugging device for unplugging an electronic appliance from an electrical power or signal source, the unplugging device being configured to remove a cable plug (1) of the electronic appliance from a receptacle (2) in response to an electrical signal, the unplugging device, comprising a mechanical actuator (20) coupled with the receptacle (2) or the cable plug (2), is **characterized in that** it further comprises a system on chip (10) comprising at least a processor (11), a memory (12), a communication module (13) and an output module (14), the system on chip (10) is configured to generate an output electrical signal (S3) in response to an input digital signal (S1) received by the communication module (13) and processed by the processor (11), the mechanical actuator (20) being configured to remove the cable plug (1) from the receptacle (2) at reception of the output electrical signal (S3) generated by the output module (14).

2. The unplugging device according to claim 1 **characterized in that** the communication module (13) of the system on chip (10) is configured to receive digital input signals (S1) provided by data sources comprising weather stations, thunderstorms alerts, electrical grid information, said data sources transmitting alert signals related to coming thunderstorms to the communication module (13), the digital input signals (S1) originating from the alert signals being processed by the system on chip (10) to determine unplugging of the electronic appliance.

3. The unplugging device according to claim 1 or 2 **characterized in that** the mechanical actuator (20) is configured to remove and eject the plug (1) from the receptacle (2) at a distance determined in order to prevent propagation of an electrical arc between contacts (3') of the receptacle (2) and contacts (3) of the plug (1).

4. The unplugging device according to claim 1 **characterized in that** the communication module (13) of the system on chip (10) is configured to receive an input digital signal (S1) transmitted, via a wireless communication network, by a portable device using a specific application, the output electrical signal (S3) generated by the system on chip (10) activating the mechanical actuator (20).

5. The unplugging device according to claim 1 **characterized in that** the communication module (13) of the system on chip (10) is configured to receive an input digital signal (S1) transmitted by a utility providing services to the appliance, the utility comprising a modem router of an internet service provider or an electrical utility controlling power distribution.

6. The unplugging device according to claim 5 **characterized in that** the communication module (13) of the system on chip (10) is configured to receive an input digital signal (S1) transmitted by the electrical utility via a wide area power line communication or via a communication network or a combination thereof.

7. The unplugging device according to claim 1 **characterized in that** the mechanical actuator (20) comprises a spring (22) maintained compressed between the receptacle (2) and the cable plug (1) by a locking mechanism (24), the locking mechanism (24) being configured to release the spring (22) at reception of the output electrical signal (S3) generated by the system on chip (10).

8. The unplugging device according to claim 7 **characterized in that** it is configured to be integrated in a wall receptacle, the mechanical actuator (20) ejecting the cable plug (1) from the wall receptacle at reception of the output electrical signal (S3) generated by the system on chip (10), said output electrical signal (S3) enabling releasing the spring (22) of the mechanical actuator (20).

9. The unplugging device according to claim 7 **characterized in that** it is configured to be integrated in the cable plug (1), the mechanical actuator (20) ejecting the cable plug (1) from the receptacle (2) at reception of the output electrical signal (S3) generated by the system on chip (10), said output electrical signal (S3) enabling releasing the spring (22) of the mechanical actuator (20).

10. The unplugging device according to claim 7 **characterized in that** it is configured to be integrated in an adaptor (30) comprising a first end plugged into the receptacle (2) and a second end plugged in the cable plug (1), the mechanical actuator (20) ejecting the cable plug (1) from the adaptor (30) at reception of the output electrical signal (S3) generated by the system on chip (10), said output electrical signal (S3) enabling releasing the spring (22) of the mechanical actuator (20), the adaptor (30) remaining plugged in the receptacle (2).

11. The unplugging device according to claim 7 **characterized in that** it is configured to be integrated in an adaptor (30) comprising a first end plugged into the receptacle (2) and a second end plugged in the cable plug (1), the mechanical actuator (20) ejecting the adaptor (30) from the receptacle (2) at reception of the output electrical signal (S3) generated by the system on chip (10), said output electrical signal (S3) enabling releasing the spring (22) of the mechanical actuator (20), the cable plug (1) remaining plugged in the adaptor (30).
